# EUROPÄISCHE PATENTANMELDUNG

(11) **EP 1 052 762 A1**
(43) Veröffentlichungstag der Anmeldung: **15.11.2000**
(21) Anmeldenummer: 99109490.5
(22) Anmeldetag: 12.05.1999
(51) Int. Cl.: H02M 1/00, H02P 7/638

(54) **Schaltungsanordnung zur Leistungssteigerung von mit Netzspannung betriebenen Motoren**

(71) Anmelder: Westfalia Werkzeugcompany Gesellschaft mit beschränkter Haftung, 58093 Hagen (DE)
(72) Erfinder: Klingbeil, Thomas, D-46240 Bottrop (DE)
(74) Vertreter: Stark, Walter, Dr.-Ing.

(57) **Zusammenfassung**

Die Erfindung betrifft eine Schaltungsanordnung zur Leistungssteigerung von mit Netzspannung betriebenen Motoren elektrischer Geräte. Um eine Schaltungsanordnung zur Leistungssteigerung anzugeben, die einen Dauerbetrieb des Motors mit höherer Leistung als der Nennleistung erlaubt, ohne dass es zu einer Störung des Motors kommt, soll diese gekennzeichnet sein durch einen über einen Eingang mit dem Spannungsnetz verbundenen Gleichrichter, insbesondere Brückengleichrichter, eine aus einem Kondensator und einem elektronisch, durch eine Steuereinheit angesteuerten Schaltelement bestehende Reihenschaltung, wobei die aus dem Kondensator und dem elektronisch angesteuerten Schaltelement bestehende Reihenschaltung einerseits und der Motor andererseits jeweils parallel zum Ausgang des Gleichrichters geschaltet sind, wobei der Kondensator zunächst bis zum Scheitelpunkt der Netzspannung aufgeladen wird und nach Erreichen des Scheitelpunktes der Netzspannung das elektronisch angesteuerte Schaltelement so angesteuert wird, dass der Kondensator, bezogen auf den Scheitelpunkt der Netzspannung, zeitlich verzögert über den Motor entladen wird.

## Beschreibung

Die Erfindung betrifft eine Schaltungsanordnung zur Leistungssteigerung von mit Netzspannung betriebenen Motoren elektrischer Geräte.

In elektrischen Geräten, wie z. B. Haushaltsgeräten, handgeführten Werkzeugmaschinen oder Gartengeräten, um nur einige Arten von elektrischen Geräten aufzuführen, befinden sich üblicherweise Motoren, die mit Wechselspannung betrieben werden und insofern über einen Schalter direkt mit dem Spannungsnetz verbunden sind. Gegebenenfalls ist zwischen dem Spannungsnetz und dem Motor noch eine Drehzahlsteuerung geschaltet, sofern die Drehzahl des Motors steuerbar sein soll.

Zur Leistungssteigerung wird üblicherweise ein entsprechend stärkeres magnetisches Feld erzeugt. Da das magnetische Feld durch den Eisenkern verstärkt wird, wobei diese Verstärkung bei einer gewissen materialabhängigen Feldstärke ihre Grenzen findet und die Motoren derart ausgelegt sind, dass diese im Bereich dieser Grenzen arbeiten, werden größere Eisenkerne verwendet. Diese Art der Leistungssteigerung ist nicht nur material- und kostenintensiv, sondern auch der zur Verfügung stehende Raum in elektrischen Geräten ist insbesondere aufgrund des Trends hin zu immer geringeren Abmessungen begrenzt.

Aufgabe der Erfindung ist es, eine Schaltungsanordnung zur Leistungssteigerung anzugeben, die einen Dauerbetrieb des Motors mit höherer Leistung als der Nennleistung erlaubt, ohne dass es zu einer Störung des Motors kommt.

Diese Aufgabe wird durch eine Schaltungsanordnung zur Leistungssteigerung von mit Netzspannung betriebenen Motoren elektrischer Geräte erreicht, die gekennzeichnet ist durch einen über einen Eingang mit dem Spannungsnetz verbundenen Gleichrichter, insbesondere Brückengleichrichter, eine aus einem Kondensator und einem elektronischen durch eine Steuereinheit angesteuerten Schaltelement bestehende Reihenschaltung, wobei die aus dem Kondensator und dem elektronisch angesteuerten Schaltelement bestehende Reihenschaltung einerseits und der Motor andererseits jeweils parallel zum Ausgang des Gleichrichters geschaltet sind, wobei der Kondensator zunächst bis zum Scheitelpunkt der Netzspannung aufgeladen wird und nach Erreichen des Scheitelpunktes der Netzspannung das elektronisch angesteuerte Schaltelement so angesteuert wird, dass der Kondensator, bezogen auf den Scheitelpunkt der Netzspannung, zeitlich verzögert über den Motor entladen wird.

Durch den Gleichrichter wird die Netzspannung zunächst in eine sogenannte pulsierende Gleichspannung umgewandelt. Eine solche pulsierende Gleichspannung ist eine mit Wechselspannungsanteilen überlagerte Gleichspannung, wobei die Spannung periodisch zu Null, aber nie negativ wird.

Nach Inbetriebnahme des elektrischen Gerätes wird der Kondensator mit Netzspannung, wobei die Spitzenspannung bei einer Netzspannung von 230 Volt etwa 325 Volt beträgt, aufgeladen. Hierdurch steigt die Kondensatorspannung bis zum Scheitelpunkt der Netzspannung an. Bis zu diesem Zeitpunkt wird die Energie für den Betrieb des Motors durch das Spannungsnetz zur Verfügung gestellt. Im Scheitelpunkt der Netzspannung ist die Kondensatorspannung gleich der Netzspannung, und der Kondensator ist vollständig aufgeladen.

Nach dem Scheitelpunkt fällt die Netzspannung ab, während die Kondensatorspannung hingegen konstant auf gleich hohem Niveau bleibt und somit größer als die Netzspannung ist, bis zeitlich verzögert das angesteuerte Schaltelement durch die Steuereinheit ein Signal erhält, woraufhin die Entladung des Kondensators beginnt. Die Entladung ist beendet, wenn die Netzspannung nach Durchlaufen des Nullpunktes wieder ansteigt und die Netzspannung zumindest gleich groß wie die Kondensatorspannung ist. Vom Beginn der Entladung bis zu diesem Zeitpunkt stellt der Kondensator die Energie für den Betrieb des Motors zur Verfügung.

Von dem Zeitpunkt an, in dem die Netzspannung wieder zumindest gleich groß der Kondensatorspannung ist, wird der Kondensator wieder aufgeladen. Während des Aufladeprozesses und danach wird die Energie für den Betrieb des Motors wieder bis zum Beginn der Entladung durch das Spannungsnetz zur Verfügung gestellt.

Durch die zeitliche Verzögerung des Entladevorganges, die durch die Ansteuerung des angesteuerten Schaltelementes durch die Steuereinheit erzielt wird, wird die Kondensatorspannung während des Entladevorganges weniger stark verringert. Hierdurch wird weniger Energie durch den Kondensator hin- und hergeschoben, was zu einer geringeren Wechselstrombelastung des Kondensators führt. Durch diese Ansteuerung ist es möglich, die für einen Kondensator vorgeschriebenen Grenzwerte, insbesondere die Wechselstrombelastung bei gegebenen Betriebsbedingungen einzuhalten.

Mittels der erfindungsgemäßen Schaltungsanordnung ist es möglich, den Motor mit einem hohen Gleichspannungsanteil, der lediglich mit geringen Wechselspannungsanteilen überlagert ist, zu betreiben, so dass der Motor mit einer höheren Leistung als der Nennleistung gefahren werden kann, ohne dass er bei Dauerbetrieb zerstört wird, da durch den hohen Gleichspannungsanteil die Eisenverluste im Kern des Motors reduziert werden.

Als Gleichrichter kann z. B. ein herkömmlicher Brücken- oder Grätzgleichrichter vorgesehen sein.

Zweckmäßigerweise kann als elektronisch angesteuertes Schaltelement ein Triac vorgesehen sein.

Um zu gewährleisten, dass der Ladevorgang des Kondensators behutsam einsetzt, ohne dass es zu Beschädigungen des Kondensators kommt, können ein Widerstand und eine Diode mit dem Schaltelement parallel geschaltet sein.

Damit die Drehzahl des Motors steuerbar ist, kann parallel zu dem Motor eine Diode als Freilaufdiode geschaltet sein und ein mit der Parallelschaltung bestehend aus dem Motor und aus der Diode in Reihe geschalteter elektronischer Schalter vorgesehen sein, wobei der elektronische Schalter durch eine weitere Steuereinheit so angesteuert wird, dass lediglich ein ausgewählter Teil der Netzspannung an den Motor weitergeleitet wird. Auf diese Weise ist die Drehzahl des Motors steuerbar.

Dabei kann als elektronischer Schalter beispielsweise ein Transistor, insbesondere Metaloxid-Semiconductor-Fieldeffecttransistor (MOSFET) vorgesehen sein.

Da derartige Transistoren für hohe Leistungen verhältnismäßig teuer in der Herstellung sind, kann eine zweipolige Phasenanschnittsteuerung in Reihe mit dem elektronischen Schalter und der Parallelschaltung bestehend aus dem Motor und aus der Diode geschaltet sein. Hierdurch kann ein elektronischer Schalter wie z. B. ein MOSFET geringerer Leistung verwendet werden, der in der Herstellung dementsprechend billiger ist. Bei einer zweipoligen Phasenanschnittsteuerung handelt es sich um ein verhältnismäßig preiswertes Bauteil, das neben anderen Elementen u.a. einen Triac aufweist. Zur Steuerung der Drehzahl des Motors muss der im Triac fließende Strom (I_{Triac}) für einen definierten Zeitraum den Haltestrom (I_{H}) unterschreiten. Da diese Unterschreitung des Haltestroms - wenn überhaupt - nur für eine sehr kurze Zeit aufgrund des nicht idealen Verhaltens der Dioden im Brücken- bzw. Grätzgleichrichter, aufgrund des nicht idealen Verhaltens einer parallel zum Motor geschalteten Freilaufdiode und aufgrund der Phasenverschiebung des Stroms durch die Induktivität der Motorwicklungen erfolgen würde, wird der durch die weitere Steuereinheit angesteuerte elektronische Schalter, wie z. B. MOSFET zu einem geeigneten Zeitpunkt abgeschaltet, so dass der Haltestrom für einen längeren Zeitraum unterschritten wird. Die Dauer der Unterschreitung des Haltestroms ist so bemessen, dass der Triac sicher abschaltet.

Die weitere Steuereinheit kann entweder parallel zu dem elektronischen Schalter oder aber parallel zu der Parallelschaltung bestehend aus dem Motor und aus der Diode und dem mit dieser Parallelschaltung in Reihe geschalteten elektronischen Schalter angeordnet sein.

Als Motor kann ein Universalmotor, der als Reihenschlussmotor ausgebildet ist und somit mit Wechsel- als auch Gleichstrom betreibbar ist, vorgesehen sein.

Im Folgenden werden in den Zeichnungen dargestellte Ausführungsbeispiele der erfindungsgemäßen Schaltungsanordnung erläutert. Es zeigen:
- Fig. 1: ein Blockschaltbild für eine Anordnung zur Leistungssteigerung eines mit Netzspannung betriebenen Motors,
- Fig. 2: den Gegenstand nach Fig. 1 mit einer ergänzten Anordnung zur Regelung der Drehzahl,
- Fig. 3: den Verlauf des Absolutwertes der Netzspannung bzw. der pulsierenden Gleichspannung sowie der Kondensatorspannung über die Zeit,
- Fig. 4: den Verlauf der Spannung am Motor bei aktivierter Leistungssteigerung und den
- Fig. 5: Stromverlauf im Triac im Bereich eines Nullpunktes der Netzspannung (Zeitpunkt 20 ms bei sinusförmigem Verlauf der Netzspannung).

In allen Figuren werden für gleiche bzw. gleichartige Bauteile die gleichen Bezugszeichen verwendet.

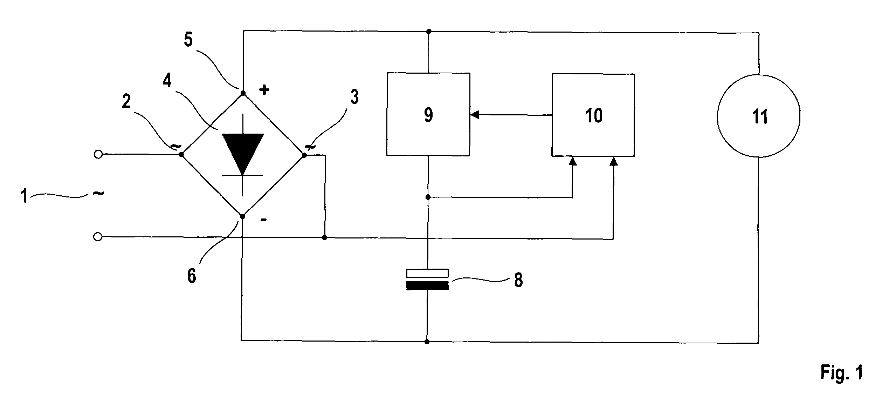

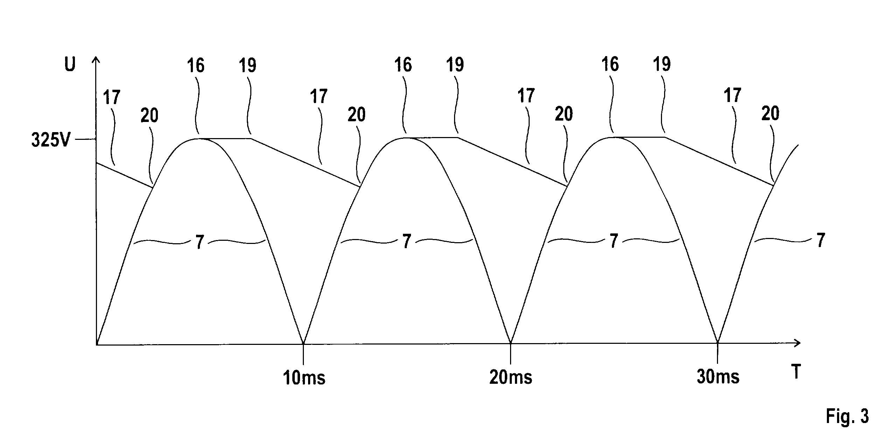

In Fig. 1 ist an einem Spannungsnetz 1 mit den Eingängen 2, 3 ein Gleichrichter 4 angeschlossen. Dieser Gleichrichter 4 weist Ausgänge 5, 6 auf und wandelt die von dem Spannungsnetz 1 zur Verfügung gestellte Wechselspannung in eine pulsierende Gleichspannung 7, deren Verlauf in Fig. 3 dargestellt ist, um. Der Verlauf der pulsierenden Gleichspannung 7 entspricht dem Absolutwert der Netzspannung. Die pulsierende Gleichspannung 7 ist eine mit Wechselspannungsanteilen überlagerte Gleichspannung und wird periodisch zu Null, aber nie negativ.

Parallel zum Gleichrichter 4 ist eine aus einem Kondensator 8 und einem elektronisch angesteuerten Schaltelement 9 bestehende Reihenschaltung geschaltet. Dabei ist ein Anschluss des Kondensators 8 mit dem elektronisch angesteuerten Schaltelement 9 verbunden. Als elektronisch angesteuertes Schaltelement 9 ist beispielsweise ein Triac vorgesehen.

Der als elektronisch angesteuertes Schaltelement 9 vorgesehene Triac wird von einer Steuereinheit 10 angesteuert, wobei die Leitungen zur Stromversorgung der Steuereinheit 10 nicht dargestellt sind, da die Stromversorgung in vielfältiger Weise erfolgen kann.

Parallel zu dem Gleichrichter 4 sowie der Reihenschaltung bestehend aus dem Kondensator 8 und dem als elektronisch angesteuerten Schaltelement 9 ausgebildeten Triac ist ein Motor 11 geschaltet.

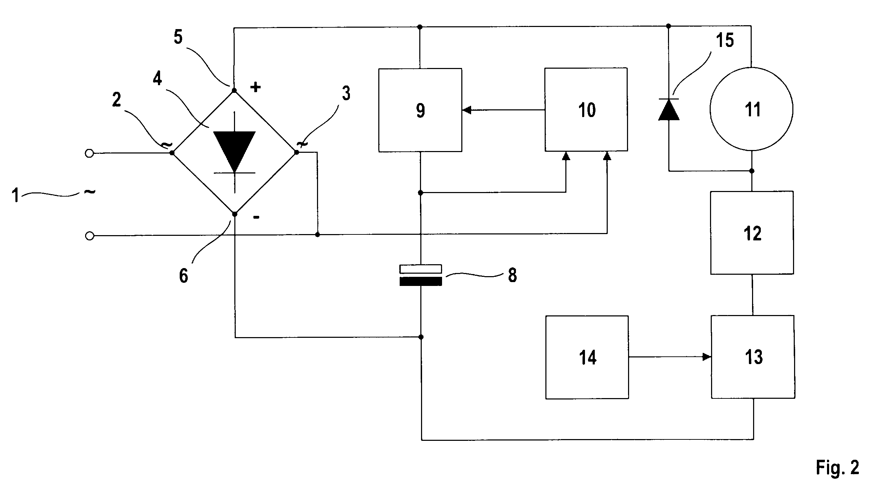

In Fig. 2 ist die in Fig. 1 dargestellte Schaltungsanordnung um eine Schaltung zur Drehzahlregelung ergänzt. Zur Regelung der Drehzahl des Motors 11 ist zwischen dem Ausgang 6 und dem Motor 11 eine zweipolige Phasenanschnittsteuerung 12 und ein in Reihe hierzu geschalteter elektronischer Schalter 13 geschaltet. Der elektronische Schalter 13 wird durch eine weitere Steuereinheit 14 angesteuert. Auch hier ist die Stromversorgung der weiteren Steuereinheit 14 nicht dargestellt, da diese auf vielfältige Weise erfolgen kann. Parallel zum Motor 11 ist eine Diode 15 als Freilaufdiode geschaltet.

In Fig. 3 ist der Verlauf der pulsierenden Gleichspannung 7, der dem Verlauf des Absolutwertes der Netzspannung entspricht, über der Zeit während des Betriebes dargestellt. Deutlich zu erkennen ist, dass der Absolutwert der Netzspannung bzw. die pulsierende Gleichspannung 7 bis zum Scheitelpunkt 16 ansteigt und dann wieder bis auf Null abfällt. Dieser Verlauf wiederholt sich periodisch, wobei in dem dargestellten Beispiel das Zeitintervall zwischen zwei aufeinander folgenden Nullpunkten 10 ms beträgt. Bei Inbetriebnahme eines elektrischen Gerätes mit einer erfindungsgemäßen Schaltungsanordnung dauert es zunächst einige Sekunden bis der Kondensator 8 hinreichend aufgeladen ist. Erst dann weist der Kondensator 8 eine gewünschte Kondensatorspannung 17 auf. Der Verlauf der Kondensatorspannung 17 ist ebenfalls in Fig. 3 eingezeichnet.

Wie deutlich zu erkennen ist, wird der Kondensator 8 zunächst bis zum Scheitelpunkt 16 der Gleichspannung 7 aufgeladen, so dass die Kondensatorspannung 17 auf das gleiche Niveau wie die Gleichspannung 7 ansteigt. Bis zum Scheitelpunkt 16 wird die Energie zum Betrieb des Motors 11 durch das Spannungsnetz 1 zur Verfügung gestellt.

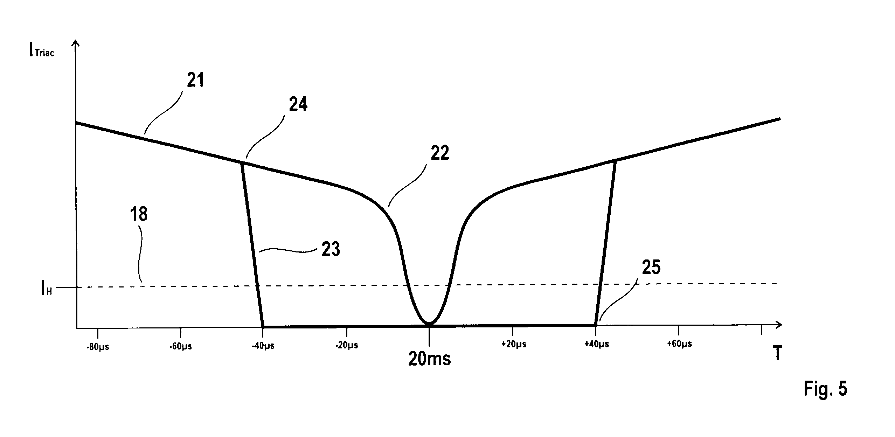

Im Scheitelpunkt 16 schaltet sich das als Triac ausgebildete elektronisch angesteuerte Schaltelement 9 ab, da die Gleichspannung 7 nicht mehr ansteigt und der im als Triac ausgebildeten elektronisch angesteuerten Schaltelement 9 fließende Strom den sogenannten Haltestrom 18 unterschreitet (Fig. 5).

Zeitlich verzögert zum Scheitelpunkt 16 erhält das als Triac ausgebildete elektronisch angesteuerte Schaltelement 9 am Punkt 19 einen ersten Zündimpuls, so dass der Kondensator 8 entladen wird und die bis dahin konstante Kondensatorspannung 17 bis zu einem Punkt 20 absinkt.

In dem Intervall zwischen einem jeden Punkt 20 und dem darauffolgenden Punkt 19 wird die Energie zum Betrieb des Motors 11 durch das Spannungsnetz 1 zur Verfügung gestellt. Zwischen dem Punkt 19 und dem Punkt 20 übernimmt der Kondensator 8 die Spannungsversorgung.

Ab dem Punkt 20 ist die Gleichspannung 7 wieder zumindest gleich groß wie die Kondensatorspannung 17. Das als Triac ausgebildete elektronisch angesteuerte Schaltelement 9 erhält erneut einen weiteren Zündimpuls (Punkt 20), so dass der Kondensator 8 bis zum nächsten Scheitelpunkt 16 wieder aufgeladen wird. Bei Erreichen des Scheitelpunktes 16 fällt die Gleichspannung 7 wieder ab und das als Triac ausgebildete elektronisch angesteuerte Schaltelement 9 schaltet sich wieder ab.

Durch die zeitliche Verzögerung des Entladevorgangs des Kondensators 8, der nicht schon im Scheitelpunkt 16, sondern erst im Punkt 19 einsetzt, wird die Kondensatorspannung 17 durch den Entladevorgang weniger stark verringert. Hierdurch wird weniger Energie durch den Kondensator 8 hin- und hergeschoben, was zu einer geringeren Wechselstrombelastung des Kondensators 8 führt. Aufgrund dieser zeitlichen Verzögerung können die vorgeschriebenen Grenzwerte für den Kondensator 8 eingehalten werden.

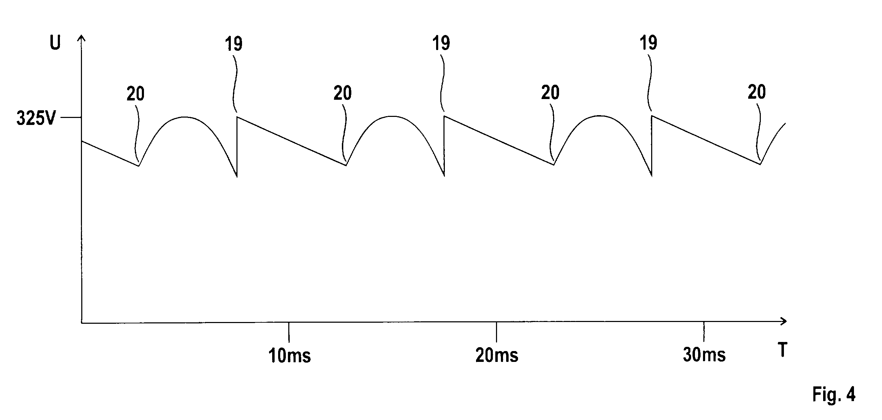

Fig. 4 zeigt den Verlauf der am Motor 11 anliegenden Spannung, sofern die erfindungsgemäße Schaltungsanordnung zur Leistungssteigerung aktiviert ist. Deutlich zu erkennen ist der schlagartige Anstieg der Spannung am Punkt 19, wenn die Entladung des Kondensators 8 bei Erhalt eines Zündimpuls des als Triac ausgebildeten elektronisch angesteuerten Schaltelementes 9 einsetzt.

In Fig. 5 ist einmal der Verlauf des Stromes 21, der im Triac der zweipoligen Phasenanschnittsteuerung 12 fließt, ohne einen als MOSFET ausgebildeten elektrischen Schalter 13 (Kurve 22) und einmal der Verlauf mit einem als MOSFET ausgebildeten elektrischen Schalter 13 (Kurve 23) dargestellt.

Wie aus der Kurve 22 zu entnehmen ist, ist der Strom 21 nur für einen kurzen Zeitraum niedriger als der Haltestrom 18. Wegen des nicht idealen Verhaltens der Dioden im Gleichrichter 4, des nicht idealen Verhaltens der als Freilaufdiode dienenden, parallel zu dem Motor 11 geschalteten Diode 15, sowie der Phasenverschiebung des Stromes durch die Induktivität der Motorwicklung reicht diese Zeit nicht aus, dass der Triac in der zweipoligen Phasenanschnittsteuerung 12, der nicht dargestellt ist, auf jeden Fall abschaltet.

Daher ist der als MOSFET ausgebildete elektrische Schalter 13 vorgesehen. Dieser sorgt dafür, dass der Strom 21 bereits im Punkt 24 auf Null abfällt und erst im Punkt 25 wieder ansteigt. Hierdurch wird das Zeitintervall, in dem der Strom 21 im Triac der zweipoligen Phasenanschnittsteuerung 12 kleiner als der Haltestrom 18 ist, von etwa 10 µs ohne einen als MOSFET ausgebildeten elektrischen Schalter 13 auf 80 µs verlängert. Da bereits an dem Punkt 24 durch den als MOSFET ausgebildeten elektrischen Schalter 13 die Unterschreitung des Haltestromes 18 bewirkt wird, kann der Triac der zweipoligen Phasenanschnittsteuerung 12 sicher abschalten, so dass der Motor 11 in der Drehzahl steuerbar ist.

## Patentansprüche

1. Schaltungsanordnung zur Leistungssteigerung von mit Netzspannung betriebenen Motoren (11) elektrischer Geräte, gekennzeichnet durch einen über einen Eingang (2, 3) mit dem Spannungsnetz (1) verbundenen Gleichrichter (4), insbesondere Brückengleichrichter, eine aus einem Kondensator (8) und einem elektronischen durch eine Steuereinheit (10) angesteuerten Schaltelement (9) bestehende Reihenschaltung, wobei die aus dem Kondensator (8) und dem elektronisch angesteuerten Schaltelement (9) bestehende Reihenschaltung einerseits und der Motor (11) andererseits jeweils parallel zum Ausgang (5, 6) des Gleichrichters (4) geschaltet sind, wobei der Kondensator (8) zunächst bis zum Scheitelpunkt (16) der Netzspannung aufgeladen wird und nach Erreichen des Scheitelpunktes (16) der Netzspannung das elektronisch angesteuerte Schaltelement (9) so angesteuert wird, dass der Kondensator (8), bezogen auf den Scheitelpunkt (16) der Netzspannung, zeitlich verzögert über den Motor (11) entladen wird.

2. Schaltungsanordnung nach Anspruch 1, dadurch gekennzeichnet, dass als elektronisch angesteuertes Schaltelement (9) ein Triac vorgesehen ist.

3. Schaltungsanordnung nach Anspruch 1 oder 2, dadurch gekennzeichnet, dass ein Widerstand und eine Diode mit dem Schaltelement (9) parallel geschaltet sind.

4. Schaltungsanordnung nach einem der Ansprüche 1 bis 3, dadurch gekennzeichnet, dass zur Steuerung der Drehzahl des Motors (11) parallel zu dem Motor (11) eine Diode (15) geschaltet ist und dass ein mit der Parallelschaltung bestehend aus dem Motor (11) und aus der Diode (15) in Reihe geschalteter elektronischer Schalter (13) vorgesehen ist, wobei der elektronische Schalter (13) durch eine weitere Steuereinheit (14) so angesteuert wird, dass lediglich ein ausgewählter Teil der Netzspannung an den Motor (11) weitergeleitet wird.

5. Schaltungsanordnung nach Anspruch 4, dadurch gekennzeichnet, dass als elektronischer Schalter (13) ein Transistor, insbesondere ein MOSFET vorgesehen ist.

6. Schaltungsanordnung nach Anspruch 4 oder 5, dadurch gekennzeichnet, dass eine zweipolige Phasenanschnittsteuerung (12) in Reihe mit dem elektronischen Schalter (13) und der Parallelschaltung bestehend aus dem Motor (11) und aus der Diode (15) geschaltet ist.

7. Schaltungsanordnung nach einem der Ansprüche 4 bis 6, dadurch gekennzeichnet, dass die weitere Steuereinheit (14) parallel zu der Parallelschaltung bestehend aus dem Motor (11) und aus der Diode (15) und dem mit dieser Parallelschaltung in Reihe geschalteten elektronischen Schalter (13) angeordnet ist.

8. Schaltungsanordnung nach einem der Ansprüche 1 bis 7, dadurch gekennzeichnet, dass als Motor (11) ein Universalmotor vorgesehen ist.
